# EUROPÄISCHE PATENTSCHRIFT

(11) **EP 2 823 175 B1**
(45) Veröffentlichungstag und Bekanntmachung des Hinweises auf die Patenterteilung: **15.03.2017**
(21) Anmeldenummer: 13701601.0
(22) Anmeldetag: 22.01.2013
(51) Int. Cl.: F02M 26/19, F02M 26/21, F02M 26/54, F02M 26/66, F02M 26/68, F02M 35/10

(54) **ABGASEINLEITVORRICHTUNG FÜR EINE VERBRENNUNGSKRAFTMASCHINE**
EXHAUST GAS FEED DEVICE FOR AN INTERNAL COMBUSTION ENGINE
DISPOSITIF D'ADMISSION DE GAZ D'ÉCHAPPEMENT POUR UN MOTEUR À COMBUSTION INTERNE

(30) Priorität: 06.03.2012 DE 102012101851
(43) Veröffentlichungstag der Anmeldung: 14.01.2015
(73) Patentinhaber: Pierburg GmbH, 41460 Neuss (DE)
(72) Erfinder: ANTONI, Christian, 50827 Köln (DE); BRONISCHEWSKI, Bernhard, 47829 Krefeld (DE); KOHNEN, Wolfgang, 52477 Alsdorf (DE)
(74) Vertreter: Patentanwälte ter Smitten Eberlein Rütten Partnerschaftsgesellschaft
(86) Internationale Anmeldenummer: PCT/EP2013/051076
(87) Internationale Veröffentlichungsnummer: WO 2013/131674

(56) Entgegenhaltungen:
- EP-A2- 1 826 391
- DE-A1-102009 057 497
- DE-C1- 19 603 592
- FR-A1- 2 861 137
- FR-A1- 2 917 131
- JP-A- 2007 285 163
- JP-A- 2010 071 127

## Beschreibung

Die Erfindung betrifft eine Abgaseinleitvorrichtung für eine Verbrennungskraftmaschine mit einem Abgasrückführkanal, einem Luftansaugkanal, in weichen der Abgasrückführkanal mündet und einem Strömungsleitelement, welches an einem Ende des Abgasrückführkanals im Abgasrückführkanal angeordnet ist.

Derartige Abgaseinleitvorrichtungen sind bekannt und werden in einer Vielzahl von Anmeldungen beschrieben. Zweck dieser Einleitvorrichtungen ist es, eine gute Durchmischung des Abgasstroms mit dem Luftstrom zu gewährleisten. Es ist jedoch darauf zu achten, dass dabei auch ein ausreichendes Druckgefälle im Abgasrückführkanal erhalten bleibt, um ausreichend große Abgasmengen zurückführen zu können. Entsprechend sind größere Druckverluste zu vermeiden.

Neben diesen Einleiteinrichtungen, die beispielsweise durch eine geschlitzte Kanalwand gebildet werden, durch die das Abgas radial aus einem umgebenden Ringkanal in den Luftansaugkanal einströmen kann, wie es beispielsweise in der DE 44 20 247 A1 beschrieben wird, sind auch statische Mischer bekannt, die dafür sorgen, dass nach der Einleitung des Abgases in den Luftstrom eine ausreichende Durchmischung sichergestellt wird. Ein plattenförmiger statischer Mischer wird beispielswiese in der DE 10 2004 025 184 A1 beschrieben.

Ein anderer statischer Mischer ist aus der US 7,743,756 B2 bekannt. Dieser Mischer weist einen inneren Abgasrückführkanal mit radialen Ausströmöffnungen auf, hinter denen einen Drall erzeugende Flügel ausgebildet sind, durch die der gemischte Abgas-Luftstrom strömt, so dass eine Verwirbelung entsteht, die zu einer Homogenisierung des Gemisches unmittelbar vor der Drosselklappe führen soll.

Bei einer derartigen Mischung über statische Mischer kann es passieren, dass vorher vorhandene Strähnen eines Gases im Gasgemisch in gleicher Weise umgelenkt werden, wie das umgebende Gas, so dass weiterhin keine gute Durchmischung gegeben ist. Bei der Durchmischung über die radiale Einleitung hingegen besteht zwar einerseits eine relativ gute Durchmischung jedoch andererseits ein hoher Druckverlust.

Des Weiteren ist die Mengenregelung des eingeleiteten Abgasstroms jeweils in Entfernung zum Einleitpunkt angeordnet, so dass Pulsationen und Druckdifferenzen im nachfolgenden Abgasstrang eine genaue Regelung erschweren.

JP 2007 285163 A und EP 1 826 391 A2 offenbaren andere Abgaseinleitvorrichtungen.

Des Weiteren ist aus der FR 29 17 131 A1 eine Abgaseinleitvorrichtung bekannt, bei der ein Abgasrückführkanal in den Ansaugkanal mündet, wobei im Bereich der Verzweigung der Ventilsitz des Abgasrückführventils ausgebildet ist. Das Abgasrückführventil ist als Hubventil ausgebildet, an dessen im Abgasrückführkanal angeordnetem Gehäuse am zum Ventilsitz entgegengesetzten Ende vier etwa tangential verlaufende Einlässe für den Abgasstrom ausgebildet sind, durch welche beim Einströmen des Abgasstroms diesem ein Drall aufgezwungen wird, der sich zum Ventilsitz und bei geöffnetem Ventil bis in den Ansaugkanal fortsetzt. Dieser Drallerzeuger führt jedoch zu einem sehr hohen Druckverlust durch die plötzliche Einschnürung des zur Verfügung stehenden Querschnitts im Bereich der tangentialen Öffnungen.

Es stellt sich daher die Aufgabe, eine gute Durchmischung des Abgasstroms und des Luftstroms bei geringen Druckverlusten und einer genauen Regelbarkeit der rückgeführten Abgasmenge sicherzustellen. Dabei soll ein möglichst geringer Bauraum benötigt und eine einfache Montage erreicht werden. Die thermische Belastung nachfolgender Bauteile soll durch die homogene Verteilung des Abgases im Luftstrom durch Reduzierung von Temperaturspitzen reduziert werden.

Diese Aufgabe wird durch eine Abgaseinleitvorrichtung mit den Merkmalen des Hauptanspruchs gelöst. Dadurch, dass das Strömungsleitelement als Drallerzeuger ausgebildet ist, wobei an einer Mündung am Ende des Abgasrückführkanals, in dem der Drallerzeuger angeordnet ist, ein Ventilsitz ausgebildet ist, der einen Ausströmquerschnitt des Abgasrückführkanals begrenzt, der über einen Regelkörper eines Abgasrückführventils geregelt ist, wobei das Ende des Abgasrückführkanals, in dem das Strömungsleitelement angeordnet ist, kegelstumpfförmig in Richtung zur Mündung zulaufend ausgebildet ist, wird lediglich dem Abgasstrom unmittelbar vor dem Eintritt in den Luftstrom ein Drall zur Verbesserung der Durchmischung aufgezwungen und eine genaue Regelbarkeit der rückgeführten Abgasmenge sichergestellt. Dies verbessert deutlich die Durchmischung und verhindert eine thermische Überlastung nachfolgender Bauteile aufgrund von Temperaturspitzen. Des Weiteren sind der benötigte Bauraum und der auftretende Druckverlust gering. Die Querschnittsverengung führt zu einer Erhöhung der Strömungsgeschwindigkeit und damit zu einer turbulenten Strömung, was zu einer zusätzlichen Verbesserung der Durchmischung beim Einströmen in den Luftkanal führt. Durch die Nutzung des Drallerzeugers wird ein drallbehafteter Abgasstrom mit besonders großen Turbulenzen im geradlinigen Luftstrom erzeugt, was wiederum die Homogenisierung verbessert.

Vorzugsweise schließt der Ausströmquerschnitt des Abgasrückführkanals einen Winkel von 30° bis 90° zum Durchströmungsquerschnitt des Luftansaugkanals ein. Entsprechend weist der eintretende Abgasstrom zumindest einen Winkel von 30° zum Luftstrom auf, wodurch parallele Schichtströmungen vermieden werden.

In einer bevorzugten Ausführung ist der Regelkörper eine exzentrisch gelagerte Klappe, deren Drehachse bezüglich des Luftstroms stromaufwärts des Ausströmquerschnitts des Abgasrückführkanals angeordnet ist. Entsprechend entsteht durch die teilweise geöffnete Klappe eine Umlenkung in Richtung des Luftstroms, wodurch zu hohe Strömungswiderstände und damit Druckverluste vermieden werden.

In einer hierzu weiterführenden vorteilhaften Ausgestaltung weist der Drallerzeuger Flügel auf, die sich radial in Richtung zu einer umgebenden Seitenwand des Abgasrückführkanals erstrecken und die in Hauptströmungsrichtung des Abgases eine wachsende Komponente in Umfangsrichtung aufweisen. So kann der Strömung ein hoher Drall bei möglichst kleinem Druckverlust aufgezwungen werden.

In einer wiederum weiterführenden Ausführungsform weist der Drallerzeuger eine zentrale Achse auf, an der die Flügel befestigt sind, welche sich in Radialrichtung bis zur umgebenden Seitenwand des Endes des Abgasrückführkanals erstrecken. Ein derartiger Drallerzeuger ist einfach herstellbar und montierbar. Die Ausbildung einer mittleren, nicht drallbehafteten Strähne in der Strömung wird vermieden.

Eine besonders einfache Montierbarkeit aufgrund der Möglichkeit einer Vormontage außerhalb des Abgaskanals ergibt sich, wenn der Drallerzeuger in einem Kanalabschnitt befestigt ist, der mit dem Drallerzeuger in das Ende des Abgasrückführkanals eingesetzt ist.

Eine weitere Verringerung des Montageaufwandes ergibt sich durch die einstückige Herstellung des Drallerzeugers mit dem umgebenden Kanalabschnitt.

Es wird somit eine Abgaseinleitvorrichtung geschaffen, mit der eine sehr gute Homogenisierung des Abgas-Luftgemisches bei geringen Druckverlusten sichergestellt wird. Dies führt zu einer Verringerung von Temperaturspitzen an nachfolgenden Bauteilen. Der Aufbau ist einfach und kostengünstig. Der benötigte Bauraum zur Sicherstellung einer ausreichenden Durchmischung wird reduziert.

Ein Ausführungsbeispiel einer erfindungsgemäßen Abgaseinleitvorrichtung ist in den Figuren dargestellt und wird nachfolgend beschrieben.
Figur 1 zeigt eine Seitenansicht einer erfindungsgemäßen Abgaseinleitvorrichtung in geschnittener Darstellung.
Figur 2 zeigt in dreidimensionaler Darstellung einen den Drallerzeuger der erfindungsgemäßen Abgaseinleitvorrichtung aus Figur 1.

Die erfindungsgemäße Abgaseinleitvorrichtung besteht aus einem Luftansaugkanal 10, in den über einen nicht dargestellten stromaufwärtigen Filter Luft für die Verbrennung in einer Verbrennungskraftmaschine in Richtung eines Kompressors eines Turboladers angesaugt wird. Zurückgeführtes Abgas wird bei einer Niederdruckabgasrückführung vor dem Verdichter in den Luftansaugkanal 10 eingebracht.

Dies erfolgt über einen Abgasrückführkanal 12, der im vorliegenden Ausführungsbeispiel im rechten Winkel zum Luftansaugkanal 10 in diesen mündet. Die zurückgeführte Abgasmenge wird über ein Abgasrückführventil 14 geregelt, dessen Regelkörper im vorliegenden Ausführungsbeispiel durch eine exzentrisch gelagerte Klappe 16 gebildet ist.

Das Abgasrückführventil 14 weist einen Aktor 18 in Form eines Elektromotors mit nachgeschaltetem Getriebe auf, über den eine als Drehachse dienende Welle 20 in Drehung versetzbar ist. Diese Welle 20 ist im Gehäuse 22 des Luftansaugkanals 10 beidseitig stromaufwärts einer Mündung 24 des Abgasrückführkanals 12 gelagert und durchdringt einseitig das Gehäuse 22 zum Anschluss an das Getriebe des Aktors 18. An der Welle 20 ist ein Hebel 26 befestigt, der als Klappenkörper zur Regelung des Durchströmungsquerschnitts des Luftansaugkanals 10 und damit zur Drosselung des Luftstroms ausgebildet sein kann.

Am Hebel 26 ist zentral eine Halteachse 28 befestigt, die sich senkrecht zum Hebel 26 erstreckt und die exzentrisch gelagerte Klappe 16 zentral durchdringt. Der Hebel 26 weist einen Absatz 30 auf, gegen den die Klappe 16 über eine Schraubenfeder 32 gedrückt wird. Hierzu ist am Ende der Halteachse 28 ein Ringkörper 34 angeordnet, gegen den die Schraubenfeder 32 mit ihrem zur Klappe 16 gegenüberliegenden Ende anliegt. Die Befestigung dieses Ringkörpers 34 auf der Halteachse 28 erfolgt mittels eines Sicherungsringes 36, der in einer Nut an der Halteachse 28 befestigt ist. Aufgrund dieser Konstruktion kann die Klappe 16 relativ zum parallelen Hebel 26 in geringem Maße gekippt werden, wodurch eine möglichst umlaufend geschlossene Auflage der Klappe 16 auf einem einen Ausströmquerschnitt 38 des Abgasrückführkanals 12 umgebenden Ventilsitz 40 sichergestellt wird.

Der Ventilsitz 40 befindet sich an der Mündung 24 des Abgasrückführkanals 12. Das Ende 42 des Abgasrückführkanals 12 weist eine kegelstumpfförmige Form beziehungsweise eine zur Mündung 24 gerichtete Einschnürung auf, wodurch die Austrittsgeschwindigkeit des Abgasstroms am Ausströmquerschnitt erhöht wird.

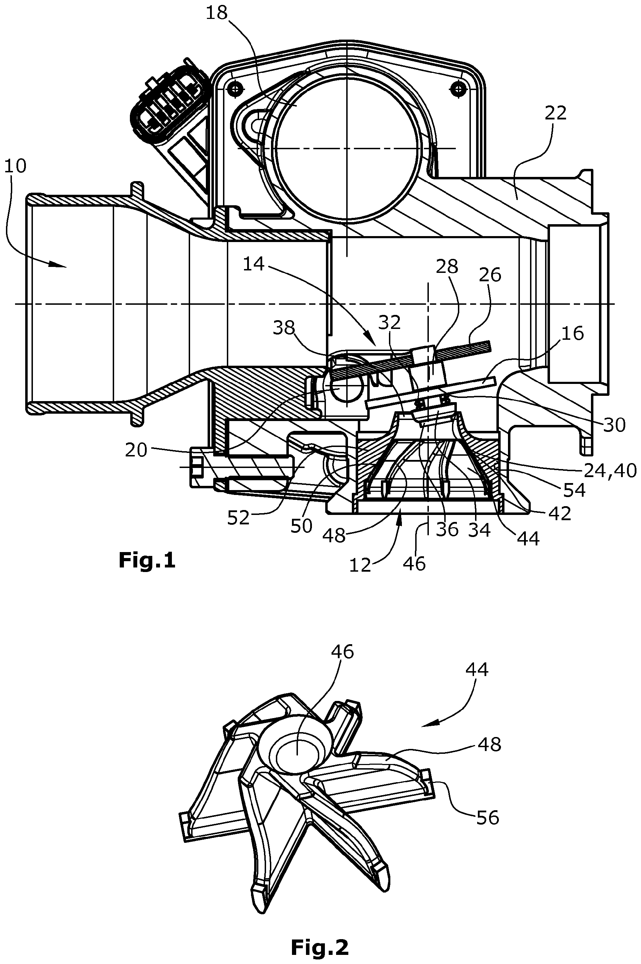

Erfindungsgemäß ist im Ende 42 des Abgaskanals ein Strömungsleitelement in Form eines Drallerzeugers 44 angeordnet, wie er in Figur 2 dargestellt ist. Dieser besteht aus einer zentralen geschlossenen konzentrisch zum Ende 42 des Abgasrückführkanals 12 angeordneten Achse 46, von der aus sich Flügel 48 radial nach außen und entlang der Achse 46 erstrecken, wobei die Flügel zusätzlich eine in Richtung der Achse 46 stetig sich vergrößernd Biegung also Komponente in Umfangsrichtung aufweisen. Im vorliegenden Ausführungsbeispiel sind sechs solcher Flügel 48 an der Achse 46 befestigt. Entsprechend der Einschnürung des Endes 42 des Abgasrückführkanals 12 verringert sich in Richtung der Achse 46 auch die Erstreckung der Flügel 48 in radialer Richtung, so dass sich die Flügel 48 jeweils bis zur umgebenden Seitenwand 50 des umliegenden, Ende 42 des Abgasrückführkanals 12 bildenden Kanalabschnitts 52 erstrecken, der im vorliegenden Ausführungsbeispiel als separates Bauteil in eine entsprechend ausgeformte Öffnung 54 des Gehäuses 22 eingesetzt ist und anschließend mit dem weiterführenden Abgasrückführkanal 12 verbunden wird. Die Befestigung des Kanalabschnitts 52 im Gehäuse 22 kann beispielsweise durch Schweißen erfolgen. Auch die Befestigung des Drallerzeugers 44 im Kanalabschnitt 52 kann vorab über Vorsprünge 56 am Ende der Flügel 48 durch Schweißen erfolgen. Andere, beispielsweise rein formschlüssige Befestigungen, beispielsweise durch ein Anflanschen des weiterführenden Abgasrückführkanals 12 sind ebenfalls denkbar.

Einem in Abhängigkeit der Stellung der Klappe 16 in den Abgasrückführkanal 12 einströmenden Abgasstrom wird im Drallerzeuger 44 eine Tangentialkomponente aufgezwungen, was bedeutet, dass ein rotierender Abgasstrom entsteht. Durch die stetige Ausbildung der Flügel 48 entsteht nur ein geringer Druckverlust. Dieser Abgasstrom wird im Folgenden je nach Stellung der Klappe 16 unterschiedlich stark in Hauptströmungsrichtung des angesaugten Luftstroms abgelenkt, wobei die Einströmgeschwindigkeit durch den ebenfalls zur Druckverlustreduzierung stetig verringerten Querschnitt des Abgasrückführkanals 16 deutlich erhöht ist. Entsprechend handelt es sich um eine turbulente Strömung, die auch im Luftansaugkanal 10 Turbulenzen bei der Einströmung erzeugt, wodurch eine sehr gute Durchmischung des Abgasstroms mit dem Luftstrom ohne Bildung von Abgassträhnen erzielt wird. Dies verringert deutlich die thermische Belastung nachfolgender Bauteile, da lokale Temperaturspritzen vermieden werden.
So wird eine gute Durchmischung bei sehr kleinem Bauraum für die Turbulenzerzeugung erzielt, da die Turbulenzen nicht durch ein Bauteil dem gesamten Gasstrom aufgezwungen werden, sondern nur dem Abgasstrom. Des Weiteren ergibt sich eine einfache Montage.

Neben dem beschriebenen Drallerzeuger lassen sich auch andere Turbulenzen im Luftansaugkanal erzeugende Strömungsleitelemente verwenden. Auch die Befestigung des Strömungsleitelementes kann auf andere Weise erfolgen, insbesondere kann das Strömungsleitelement einstückig mit den umgebenden Kanalwänden hergestellt werden. Des Weiteren kann der Abgasrückführkanal unter einem anderen Winkel in den Luftansaugkanal münden und das Abgasrückführventil kann derart angeordnet werden, dass eine möglichst geringe Beeinflussung des Luftstroms durch das Ventil erfolgt, die Öffnung also noch im Ende des Abgasrückführkanals stattfindet.

## Patentansprüche

1. Abgaseinleitvorrichtung für eine Verbrennungskraftmaschine mit einem Abgasrückführkanal (12),
einem Luftansaugkanal (10), in welchen der Abgasrückführkanal (12) mündet und
einem Strömungsleitelement (44), welches an einem Ende (42) des Abgasrückführkanals (12) Im Abgasrückführkanal (12) angeordnet ist,
**dadurch gekennzeichnet, dass**
das Strömungsleitelement als Drallerzeuger (44) ausgebildet ist, wobei an einer Mündung (24) am Ende (42) des Abgasrückführkanals (12), in dem der Drallerzeuger (44) angeordnet ist, ein Ventilsitz (40) ausgebildet ist, der einen Ausströmquerschnitt (38) des Abgasrückführkanals (12) begrenzt, der über einen Regelkörper (16) eines Abgasrückführventils (14) geregelt ist, wobei das Ende (42) des Abgasrückführkanals (12), in dem das Strömungsleitelement (44) angeordnet ist, kegelstumpfförmig in Richtung zur Mündung (24) zulaufend ausgebildet ist.

2. Abgaseinleitvorrichtung für eine Verbrennungskraftmaschine nach Anspruch 1,
**dadurch gekennzeichnet, dass**
der Ausströmquerschnitt (38) des Abgasrückführkanals (12) einen Winkel von 30° bis 90° zum Durchströmungsquerschnitt des Luftansaugkanals (10) einschließt.

3. Abgaseinleitvorrichtung für eine Verbrennungskraftmaschine nach einem der Ansprüche 1 oder 2,
**dadurch gekennzeichnet, dass**
der Regelkörper eine exzentrisch gelagerte Klappe (16) ist, deren Drehachse (20) bezüglich des Luftstroms stromaufwärts des Ausströmquerschnitts (38) des Abgasrückführkanals (12) angeordnet ist.

4. Abgaseinleitvorrichtung für eine Verbrennungskraftmaschine nach einem der vorhergehenden Ansprüche,
**dadurch gekennzeichnet, dass**
der Drallerzeuger (44) Flügel (48) aufweist, die sich radial in Richtung zu einer umgebenden Seitenwand (50) des Abgasrückführkanals (12) erstrecken und die in Hauptströmungsrichtung des Abgases eine wachsende Komponente in Umfangsrichtung aufweisen.

5. Abgaseinleitvorrichtung für eine Verbrennungskraftmaschine nach Anspruch 4,
**dadurch gekennzeichnet, dass**
der Drallerzeuger (44) eine zentrale Achse (46) aufweist, an der die Flügel (48) befestigt sind, welche sich in Radialrichtung bis zur umgebenden Seitenwand (50) des Endes (42) des Abgasrückführkanals (12) erstrecken.

6. Abgaseinleitvorrichtung für eine Verbrennungskraftmaschine nach einem der vorhergehenden Ansprüche,
**dadurch gekennzeichnet, dass**
der Drallerzeuger (44) in einem Kanalabschnitt (52) befestigt ist, der mit dem Drallerzeuger (44) in eine Öffnung (54) eines Gehäuses (22) des Luftansaugkanals (10) eingesetzt ist.

7. Abgaseinleitvorrichtung für eine Verbrennungskraftmaschine nach einem der vorhergehenden Ansprüche,
**dadurch gekennzeichnet, dass**
der Drallerzeuger (44) einstückig mit einem umgebenden Kanalabschnitt (52) hergestellt ist.

## Claims

1. An exhaust gas feed device for an internal combustion engine, comprising:
an exhaust gas recirculation duct (12),
an air intake duct (10) into which the exhaust gas recirculation duct (12) opens, and
a flow-guiding element (44) arranged in the exhaust gas recirculation duct (12) at an end (42) of the exhaust gas recirculation duct (12),
**characterized in that**
the flow-guiding element is configured as a swirl generator (44), wherein a valve seat (40) is formed at an outlet (24) at the end (42) of the exhaust gas recirculation duct (12) in which the swirl generator (44) is arranged, the valve seat being configured to limit an outflow cross-section (38) of the exhaust gas recirculation duct (12), which is regulated via a regulator body (16) of an exhaust gas recirculation valve (14), wherein the end (42) of the exhaust gas recirculation duct (12), in which the flow-guiding element (44) is arranged, is formed to taper in a frustoconical shape towards the outlet (24).

2. The exhaust gas feed device for an internal combustion engine as recited in claim 1, **characterized in that** the outflow cross section (38) of the exhaust gas recirculation duct (12) includes an angle which is between 30° and 90° with the flow cross section of the air intake duct (10).

3. The exhaust gas feed device for an internal combustion engine as recited in one of claims 1 or 2, **characterized in that** the regulator body is an eccentrically supported flap (16) comprising a rotary axis (20) which, with respect to the airflow, is arranged upstream of the outflow cross section (38) of the exhaust gas recirculation duct (12).

4. The exhaust gas feed device for an internal combustion engine as recited in one of the preceding claims, **characterized in that** the swirl generator (44) comprises vanes (48) arranged to extend radially towards a surrounding side wall (50) of the exhaust recirculation duct (12), the vanes comprising a component which increases in a circumferential direction, as seen in a main flow direction of the exhaust gas.

5. The exhaust gas feed device for an internal combustion engine as recited in claim 4, **characterized in that** the swirl generator (44) further comprises a central axle (46) to which the vanes (48) are fastened, the vanes being configured to extend in the radial direction to the surrounding side wall (50) of the end (42) of the exhaust gas recirculation duct (12).

6. The exhaust gas feed device for an internal combustion engine as recited in one of the preceding claims, **characterized in that** the swirl generator (44) is fastened inside a duct section (52) which, together with the swirl generator (44) is inserted into an opening (54) of a housing (22) of the air intake duct (10).

7. The exhaust gas feed device for an internal combustion engine as recited in one of the preceding claims, **characterized in that** the swirl generator (44) is manufactured integrally with a surrounding duct section (52).

## Revendications

1. Dispositif d'admission de gaz d'échappement pour un moteur à combustion interne avec
un canal de recirculation de gaz d'échappement (12),
un canal d'aspiration d'air (10) dans lequel le canal de recirculation de gaz d'échappement (12) s'ouvre, et
un élément de guidage d'écoulement (44) disposé à une extrémité du canal de recirculation de gaz d'échappement (12) dans le canal de recirculation de gaz d'échappement (12),
**caractérisé en ce que**
ledit élément de guidage d'écoulement (44) est réalisé sous forme de générateur de tourbillon (44), un siège de soupape (40) étant disposé à une ouverture (24) à l'extrémité (42) du canal de recirculation de gaz d'échappement (12) dans lequel le générateur de tourbillon (44) est disposé, ledit siège de soupape délimitant une section transversale d'échappement (38) du canal de recirculation de gaz d'échappement (12) qui est réglée par un corps de régulation (16) d'une soupape de recirculation de gaz d'échappement (14), ladite extrémité (42) du canal de recirculation de gaz d'échappement (12), dans lequel ledit élément de guidage d'écoulement (44) est disposé, s'effilant en forme tronconique vers l'ouverture (24).

2. Dispositif d'admission de gaz d'échappement pour un moteur à combustion interne selon la revendication 1, **caractérisé en ce que** la section transversale d'échappement (38) du canal de recirculation de gaz d'échappement (12) forme un angle de 30° à 90° par rapport à la section transversale d'écoulement du canal d'aspiration d'air (10).

3. Dispositif d'admission de gaz d'échappement pour un moteur à combustion interne selon la revendication 1 ou 2, **caractérisé en ce que** le corps de régulation est un clapet (16) supporté de manière excentrique, dont l'axe de rotation (20) est disposé, par rapport à l'écoulement d'air, en amont de que la section transversale d'échappement (38) du canal de recirculation de gaz d'échappement (12).

4. Dispositif d'admission de gaz d'échappement pour un moteur à combustion interne selon l'une quelconque des revendications précédentes, **caractérisé en ce que** le générateur de tourbillon (44) comprend des ailettes (48) s'étendant radialement vers un paroi latéral (50) entourant du canal de recirculation de gaz d'échappement (12) et comprenant une composante croissante dans la direction circonférentielle vu dans la direction principale d'écoulement de gaz d'échappement.

5. Dispositif d'admission de gaz d'échappement pour un moteur à combustion interne selon la revendication 4, **caractérisé en ce que** le générateur de tourbillon (44) comprend une axe centrale (46) à laquelle les ailettes (48) sont fixées, qui s'étendent dans la direction radiale jusqu'au paroi latéral (50) entourant de ladite extrémité (42) du canal de recirculation de gaz d'échappement (12).

6. Dispositif d'admission de gaz d'échappement pour un moteur à combustion interne selon l'une quelconque des revendications précédentes, **caractérisé en ce que** le générateur de tourbillon (44) est fixé dans une section du canal (52) qui est placée avec ledit générateur de tourbillon (44) dans une ouverture (54) d'un boitier (22) du canal d'aspiration d'air (10).

7. Dispositif d'admission de gaz d'échappement pour un moteur à combustion interne selon l'une quelconque des revendications précédentes, **caractérisé en ce que** le générateur de tourbillon (44) est fabriqué d'un seul tenant avec une section de canal (52) entourante.
